# DEMANDE DE BREVET EUROPEEN

(11) **EP 0 738 567 A2**
(43) Date de publication de la demande: **23.10.1996**
(21) Numéro de dépôt: 96104746.1
(22) Date de dépôt: 26.03.1996
(51) Int. Cl.: B26D 7/18, B26D 7/26

(54) **Outils pour machine de découpe d'éléments en plaque, et équipements associés**

(30) Priorité: 18.04.1995 CH 1104/95
(71) Demandeur: BOBST S.A., CH-1001 Lausanne (CH)
(72) Inventeur: Rebeaud, Jean-Claude, 1052 Le Mont-sur-Lausanne (CH)
(74) Mandataire: Colomb, Claude

(57) **Abrégé**

L'outil plan (20) pour machine de découpe d'éléments en plaque est constitué d'une planche (22), si désiré ajourée, dont la face inférieure est garnie d'organes de travail (27, 28), dont la face supérieure est complétée en son bord aval d'un plot de centrage (25) et d'un ou plusieurs lardons de fixation (23). En son bord amont, un ou plusieurs lardons de fixation (24) protubèrent à l'extérieur de la planche (22). Le bord gauche de l'outil plan (20) est complété d'un moyen de préhension (26). Les organes de travail (27, 28) peuvent garnir la face supérieure et les lardons (23) et le plot de centrage (25) sont alors sur la face inférieure.

## Description

La présente invention est relative à des outils plans ainsi qu'à des équipements associés permettant de les monter dans une machine à découpe d'éléments en plaque tels que, par exemple, des feuilles de papier ou de carton, ou de les monter dans une table de réglages annexe. L'invention est plus particulièrement relative à des outils ajourés ou supportant des équipements d'éjection de déchets installés dans la station d'éjection, voire un outil portant des couteaux installés dans la presse à platine de découpe.

Par exemple, ces machines sont utilisées pour découper dans chaque feuille un ou plusieurs formats qui, après plage et collage, peuvent être transformés en des boîtes. Chaque format inclut généralement les six faces d'une boîte, certains bords étant complétés de languettes de collage ou de fermeture. Utilement, les déchets, c'est-à-dire les zones inutilisées de la feuille entre les languettes ou entre les formats sont immédiatement éjectés après la découpe pour n'accumuler dans la pile de sortie que des formats finis reliés entre eux par quelques points de rupture.

Une telle machine comprend usuellement d'abord une station d'introduction dans laquelle les feuilles sont appréhendées une à une du dessus d'une pile pour être envoyées sur une table marge où elles sont mises en position contre des taquets frontaux et latéraux. La feuille peut alors être saisie en son bord frontal par une série de pinces montées le long d'une barre transversale, dont chaque extrémité est attachée à un train de chaîne latéral emmenant la barre, donc la feuille, dans les stations de traitement suivantes. La feuille est ainsi transportée dans une station de découpe comprenant une presse à platine munie de couteaux, puis dans une station d'éjection où les déchets sont pincés par des aiguilles pour être entraînés vers le bas dans un bac. Si désiré, la station de découpe peut être précédée d'une station d'impression également à platine. Ces stations de traitement sont suivies d'une station de réception dans laquelle chaque feuille découpée est relâchée par les pinces pour tomber, à l'équerre, sur le dessus d'une pile de sortie.

Dans la station d'éjection, la feuille est amenée à plat sur un premier outil médian sous la forme d'une planche horizontale qui est ajourée selon le pourtour des zones à éjecter. Un outil d'éjection supérieur horizontal, supportant des aiguilles d'éjection, des éjecteurs et/ou des presseurs, est mobile dans le sens vertical selon un mouvement alternatif synchronisé de telle sorte que l'outil soit abaissé peu après l'arrivée d'une feuille. Sous la planche ajourée se trouve un deuxième outil d'éjection, dit inférieur, horizontal supportant des aiguilles verticales télescopiques disposées en correspondance avec les éjecteurs supérieurs. Ainsi, lorsque l'outil supérieur s'abaisse sur une feuille découpée mise en place sur la planche, les combinaisons éjecteurs/aiguilles télescopiques respectives pincent les zones de déchets qu'elles emmènent vers le bas où elles tombent dans un bac.

Dans la suite de l'exposé, on utilisera les termes d'amont et d'aval en référence au sens de déplacement des feuilles, c'est-à-dire qu'une pièce côté amont est proche de l'entrée de la station, alors qu'une pièce côté aval est proche de la sortie. De manière analogue, les expressions gauche et droite sont à considérer par rapport au sens de défilement de la bande, le côté gauche étant usuellement le côté conducteur et le côté droit le côté opposé au conducteur de la machine.

Les outils d'éjection sont transformés à chaque changement de série de productions pour les adapter aux nouvelles exigences telles que type de feuille, format de feuille, contours diversdes parties à éjecter. Notamment, l'outil inférieur doit être conçu de telle sorte que sa structure n'interfère pas avec la libre chute des déchets une fois ceux-ci enlevés.

A ces fins, les outils supérieurs et inférieurs couramment utilisés sont constitués chacun d'un cadre amovible métallique rectangulaire à l'intérieur duquel est accroché un quadrillage de traverses. Ce cadre et ces traverses sont fabriqués à partir de barres profilées métalliques, en aluminium de préférence pour leur relative légèreté. Le profil plus haut que large de ces barres assure une grande rigidité dans le sens vertical de l'outil. Les équipements d'éjection proprement dits sont ensuite disposés selon les besoins le long des traverses et maintenus grâce à des pièces d'ancrage.

Les faces externes des traverses amont et aval du cadre d'un outil présentent une rainure permettant de sortir puis de réinstaller cet outil dans la station en le passant par une fenêtre latérale et en le coulissant le long de deux lardons amont et aval appartenant au mécanisme d'entraînement de la station. Le cadre est de plus complété en ses quatre coins de plots de centrage à partie conique et recevant des tenons de verrouillage.

Pour faciliter la transformation de ces outils lors du passage d'une série de productions à une autre, ceux-ci sont sortis de la station et installés dans une table de réglage, c'est-à-dire une structure comprenant des paires de lardons de support des outils les uns au dessus des autres et des dispositifs de verrouillage des plots de centrage. Dans cette table, l'ordre des outils est inversé : l'outil d'éjection supérieur étant installé dans la partie inférieure de la table, et l'outil inférieur étant installé au dessus. Cette disposition facilite l'implantation des aiguilles télescopiques de l'outil inférieur rigoureusement en vis-à-vis des éjecteurs de l'outil supérieur.

La manutention de ces outils d'éjection de la station vers la table de réglage puis de retour s'avère à chaque fois longue fastidieuse de par le poids et l'encombrement de ces outils. Certains ateliers se sont équipés de moyens de levage dont le crochet est spécialement adapté pour prendre un outil d'éjection et le transporter à l'horizontale. D'autres ateliers disposent de moyens de levage de toute la table de réglage pour l'amener directement contre la fenêtre de la station afin de seulement coulisser les outils. Ces opérations restent toutefois encore très délicates.

Par ailleurs, en constatant que l'outil d'éjection supérieur ne nécessite pas d'espace intermédiaire pour le passage de déchets, on a pensé à remplacer le quadrillage des traverses internes par une planche unique dans laquelle sont implantés les aiguilles d'éjection, éjecteurs et presseurs.

Toutefois, le maintien de cette planche dans le cadre au moyen d'une pluralité de vis réparties sur le pourtour du cadre et prenant appui contre la tranche de la planche provoque trop fréquemment un gauchissement de celle-ci, ce qui fausse l'alignement des aiguilles. De plus, il est nécessaire de rapporter une plaque de rigidité contre la face supérieure pour tenir les forces de poussée des déchets vers le bas. Cet outil reste donc encore trop lourd et encombrant.

Le but de la présente invention est un outil plan, notamment pour station d'éjection d'une machine de découpe d'éléments en plaque, qui soit particulièrement maniable par son poids et son encombrement réduit; ainsi que les équipements de fixations associés, aussi bien dans la station de la machine que dans la table de réglage, qui assurent toujours un maintien ferme en une position précise de cet outil, et qui puissent être mis en oeuvre facilement et rapidement.

Ces buts sont réalisés du fait que l'outil est une planche dont la face inférieure est garnie d'organes de travail, tels que des ajours ou des éjecteurs et/ou presseurs, dont la face supérieure est complétée en son bord aval d'un plot de centrage et d'un ou plusieurs lardons de fixation, et en son bord amont également d'un ou plusieurs lardons de fixation, lesquels lardons protubèrent à l'extérieur de la planche, et dont le bord gauche est complété d'un moyen de préhension; ou à l'inverse les organes de travail garnissant la face supérieure et les lardons et plot de centrage la face inférieure.

Cette planche est de préférence réalisée en bois, mais peut également être réalisée en matériau synthétique notamment stratifié pour autant qu'il présente une même légèreté pour une rigidité similaire, et qu'il autorise une implantation d'organes de travail. Cet outil de dimensions réduites au strict minimum et sensiblement allégé devient facilement manipulable par un opérateur seul, d'autant plus que des moyens de préhension, tels que des poignées simplement réalisés par deux ajours, sont ménagés sur le bord en vis-à-vis de la fenêtre de la station.

Alors l'équipement de fixation de cet outil dans la station de la machine comprend un cadre solidaire de cette station, cadre dont les faces inférieures des traverses amont et aval sont complétées de barres de support protubérant à l'intérieur (pour faire office de rail) et sur lesquelles reposent les lardons en correspondance de la planche, ainsi que des moyens de pression latéraux du plot de centrage de la planche contre une butée du cadre et des moyens de pression longitudinaux du bord aval de la planche contre une face verticale de référence du cadre, par exemple la face interne de la barre de support aval. Lorsque les organes de l'outil sont prévus pour pénétrer dans l'élément en plaque, il est alors hautement souhaitable que le cadre comprenne une ou plusieurs traverses intermédiaires de raidissement dont les faces inférieures se situent au niveau de la face supérieure de l'outil.

Dans le cas d'un outil dont les organes de travail garnissent la face supérieure, il convient alors de remplacer les barres de support inférieures par des glissières complétant les faces supérieures des traverses amont et aval. Si nécessaire, le cadre comprend de plus des traverses intermédiaires dont les faces supérieures se situent au niveau de la face inférieure de l'outil.

Selon un mode de réalisation préféré, les moyens de pression longitudinale du bord aval de la planche comprennent un axe transversal de commande monté mobile en rotation proche et parallèle de la face interne de la traverse aval du cadre, cet axe portant une pluralité de bras radiaux venant directement, ou par l'intermédiaire de barrettes reliant deux extrémités de bras, appuyer sur la face amont du lardon aval en fin de rotation de l'axe sous l'effet de moyens élastiques comprimés agissant entre le cadre et l'axe ou les bras, l'une des extrémités de l'axe comportant une poignée permettant d'appliquer une rotation en sens contraire.

Avantageusement alors, les moyens de pression latéraux comprennent une came solidaire de l'axe de commande, came dont la face en vis-à-vis de la butée du cadre est tout ou en partie oblique orientée de telle sorte à pousser, lors de la rotation de l'axe sous l'effet des moyens élastiques, le plot de centrage de la planche latéralement contre la butée protubérant de la face interne de la traverse aval du cadre.

Avantageusement, les moyens élastiques comprennent un ou plusieurs ressorts hélicoïdaux coaxiaux à l'axe de commande auquel ils sont reliés en une première extrémité, par exemple par un collier de fixation, et dont l'autre extrémité est reliée au corps d'un palier de support de l'axe solidaire du cadre. L'avantage de cet équipement est qu'il n'effectue une action de serrage que sur le seul bord aval de l'outil, le bord amont reposant librement sur sa barre de support correspondante. Cette disposition évite tout risque de gauchissement nuisible. De plus, l'action de serrage peut être rendue uniforme par l'emploi de plusieurs ressorts et bras ou barrettes d'appui. Enfin, par une simple action de levée de la poignée, on déverrouille rapidement et totalement l'outil de son cadre. A l'inverse, le verrouillage longitudinal et latéral s'effectue simultanément lors de l'abaissement de la poignée.

Dans le cas d'un outil d'éjection supérieur réalisé selon l'invention, l'équipement de fixation de cet outil mis à l'envers dans une table de réglage peut comprendre une paire de barres de support montées horizontalement en vis-à-vis dans la structure de la table, si nécessaire au moyen d'entretoises, la première barre de support recevant le lardon aval présentant une encoche de centrage pour le plot de centrage de l'outil, et cette barre étant surmontée d'une barre de référence contre laquelle vient prendre appui le bord aval de la planche; la seconde barre de support recevant le lardon amont étant complétée de moyens élastiques poussant l'outil en direction de la première barre de support.

Selon un mode de réalisation préféré, les moyens élastiques comprennent une lame ressort verticale parallèle à la seconde barre de support, et dont le bord supérieur est solidaire de la structure de la table et dont le bord inférieur appuie sur la tranche externe du lardon amont.

L'installation de la planche-outil dans cette table de réglage est particulièrement rapide et toujours précise. Cette table peut être allégée dans la mesure où aucun mouvement de fonctionnement ne nécessite de moyens de serrage de maintien.

L'invention sera mieux comprise à l'étude d'exemples d'exécution pris à titre nullement limitatif et illustrés dans les figures annexées dans lesquelles :
- la figure 1 est une vue en perspective d'un outil selon l'invention,
- la figure 2 est une vue en perspective d'un équipement de fixation de l'outil de la figure 1 dans une machine,
- la figure 3 est une vue en perspective de l'outil de la figure 1 installé dans l'équipement de fixation de la figure 2, et
- la figure 4 est une vue de côté d'une table de réglage contenant un outil d'éjection inférieur selon l'état de la technique et un outil d'éjection supérieur selon l'invention, ces outils étant montés à l'envers.

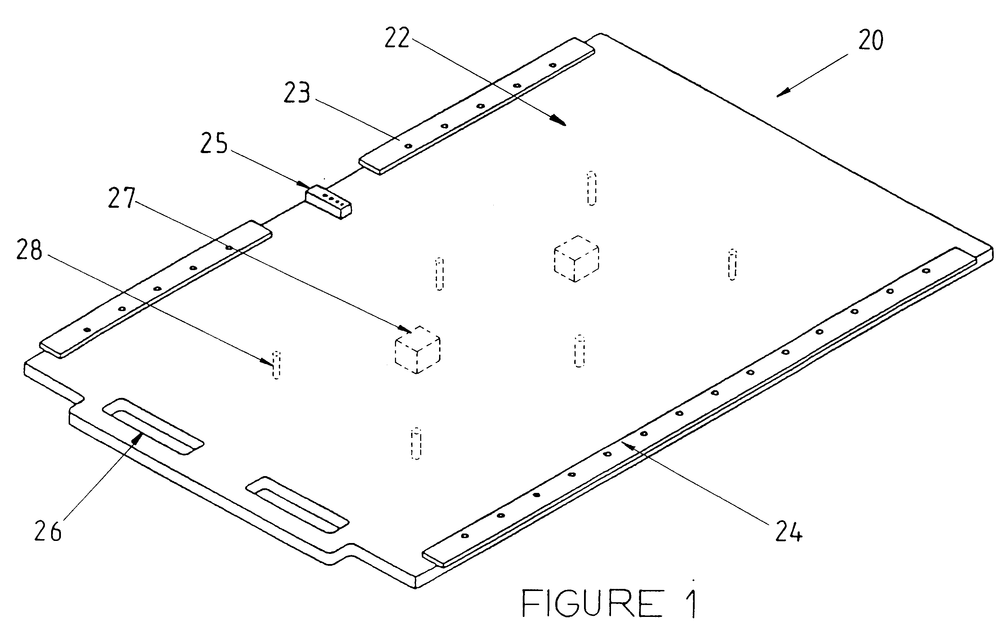

Sur la figure 1 est illustré un outil d'éjection supérieur 20 réalisé selon l'invention. Cet outil comprend une planche 22 dans la face inférieure de laquelle sont implantées des aiguilles d'éjection supérieures ou éjecteurs 28 ainsi que des patins presseurs 27 plaquant la feuille de papier ou carton contre la planche intermédiaire ajourée.

La face supérieure de la planche 22 est complétée, en son bord amont, d'un lardon unique 24 et, en son bord aval, de deux demi-lardons 23 entourant un pot de centrage 25 qui est situé sur la ligne médiane de l'outil. Les lardons se présentent sous la forme de plaquettes métalliques longilignes de section rectangulaire vissées le long du bord de telle sorte qu'une partie comprise entre le quart et le tiers de la largeur, soit entre 6 et 8 mm, protubère à l'extérieur de la planche 22.

Le bord gauche côté conducteur est complété de poignées 26 simplement réalisées par deux ajours rectangulaires. La planche 22 est de préférence réalisée en bois, qui est un matériau peu onéreux, facile à travailler et relativement léger. Bien évidemment, cette planche pourrait également être réalisée en matière plastique et/ou résine stratifiée. Cet outil mesure 755 mm par 556 mm. Comme on peut le constater, un tel outil est facilement transportable par un opérateur seul.

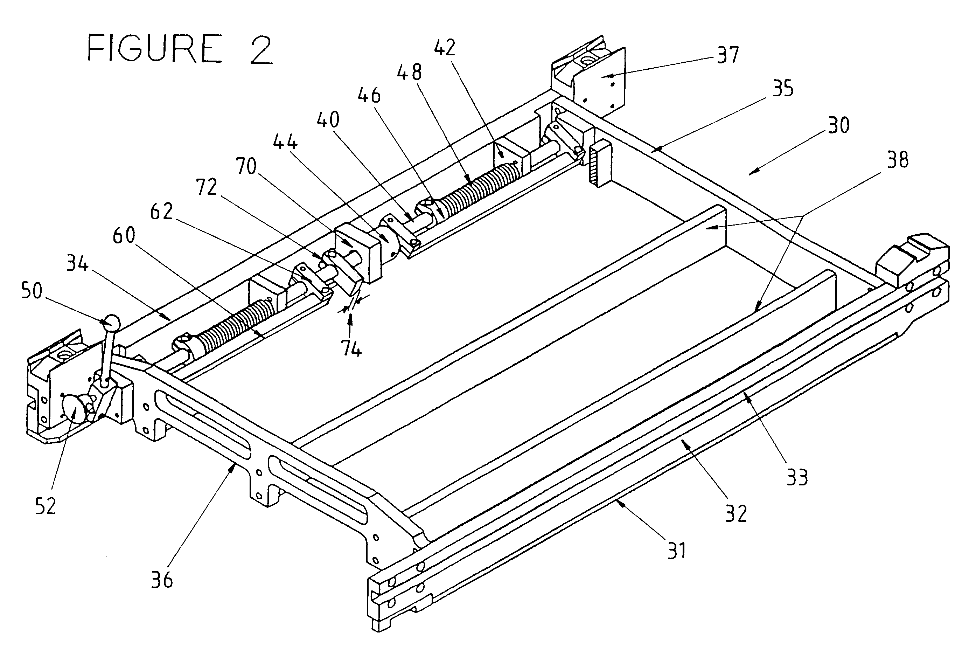

La figure 2 illustre un cadre installé à demeure dans la station d'éjection et spécialement modifié pour recevoir l'outil d'éjection supérieur de la figure 1. Ce cadre est formé de deux traverses : une amont 32 et une aval 34, tenues ensemble par deux longerons : un droit 35 et un gauche 36. De manière connue, les faces externes des traverses amont et aval présentent chacune une rainure 33 permettant d'engager ce cadre sur des lardons appartenant au mécanisme d'entraînement de la station. L'exactitude de la position de ce cadre dans la station est assurée par quatre plots 37 rapportés aux quatre coins du cadre, ces plots présentant une partie conique de centrage et un orifice central recevant un tenon de verrouillage.

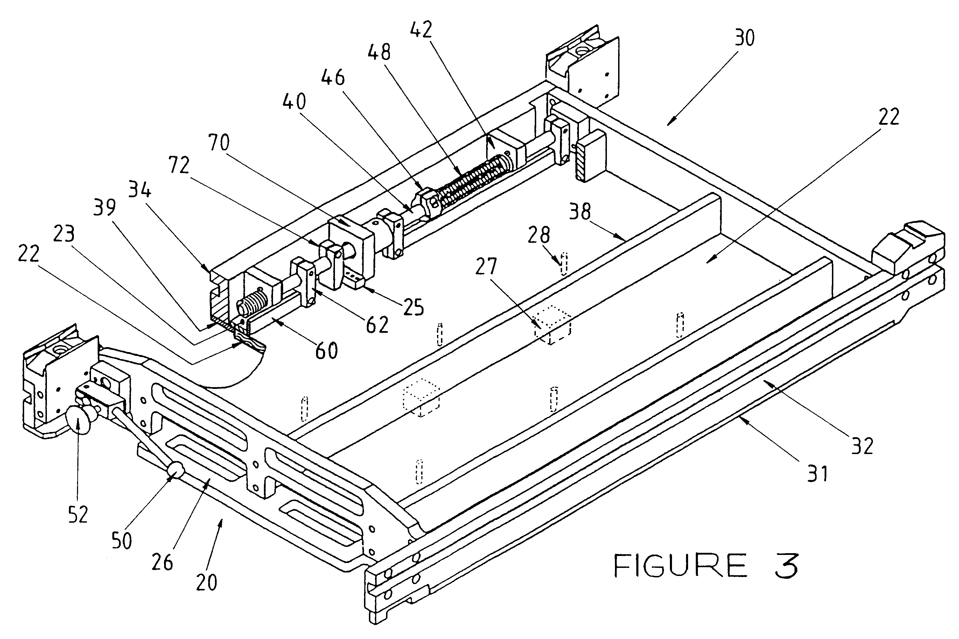

Plus particulièrement selon l'invention, les bords inférieurs des traverses amont 32 et aval 34 sont respectivement complétés de barres de support amont 31 et aval 39, cette dernière étant mieux visible sur la figure 3. Ces barres de support longilignes de section transversale rectangulaire sont montées de telle sorte qu'elles protubèrent à l'intérieur du cadre sur un quart voire un tiers de la largeur pour former des rails d'environ 10 mm.

Par ailleurs, le cadre 30 est complété de traverses intermédiaires 38 parallèles aux traverses amont et aval. Les faces inférieures de ces traverses intermédiaires sont de plus à niveau avec les faces inférieures des traverses aval et amont, c'est-à-dire avec les faces supérieures des barres de support 31, 34. Toutes ces traverses présentent une section transversale plus haute que large pour assurer une bonne rigidité verticale.

Le cadre 30 comprend, de plus, sur la face interne de la traverse aval 34, un dispositif de mise en position et de serrage rapide du bord aval de l'outil 20, ce dispositif étant illustré en position ouverte sur la figure 2 et en positionfermée de verrouillage sur la figure 3.

Ce dispositif comprend d'abord un axe de commande 40 tenu, mobile en rotation, par deux paliers d'extrémité et plusieurs paliers intermédiaires 42. Si désiré, cet axe peut être en plusieurs tronçons reliés par un ou plusieurs manchons 44.

Cet axe de commande 40 porte deux paires de bras radiaux 62, chaque paire tenant entre elle une barrette d'appui 60. La dimension des bras est calculée de telle sorte qu'en position verticale orientée vers le bas, le bord inférieur des barrettes 60 arrive peu au dessus, de l'ordre de 2 à 5 mm, du niveau des faces inférieures des traverses.

Cet axe de commande 40 porte également une came de verrouillage latéral 72 proche d'une butée centrale de cadre 70, en l'occurrence un palier complémentaire de l'axe. Notamment, en considérant cette came à la verticale orientée vers le bas comme illustré sur la figure 3, le bord aval de la face active, c'est-à-dire en vis-à-vis de la butée 70, est chanfreiné, cette partie oblique étant orientée vers la traverse 34. Si désiré, seulement la moitié inférieure de ce bord est chanfreinée. En alternative, quoi que légèrement moins efficace, la moitié inférieure de la face active de la came est oblique orientée vers le bas.

Sur l'axe de commande 40 sont enfilés deux ressorts hélicoïdaux cylindriques 48 à action angulaire. Plus précisément, l'une des extrémités d'un ressort, la droite par exemple, est engagée dans un orifice d'un palier, alors que l'autre extrémité, le gauche, est rendue solidaire de l'axe de commande 40 par un collier de serrage 46. Ce ressort 48 est comprimé en rotation de telle sorte qu'au repos, il tende à tourner l'axe 40 dans le sens horaire tel qu'illustré sur les figures 2 et 3, c'est-à-dire tende à rabattre vers le bas les barrettes 60 et cames 72.

L'extrémité gauche de l'axe 40, c'est-à-dire côté conducteur, comporte une poignée 50 permettant de tourner cet axe dans le sens inverse des aiguilles d'une montre contre l'effet des ressorts 48, et de la maintenir en position au moyen d'un loquet de poignée 52 pénétrant dans un orifice correspondant du cadre. Ainsi, lorsque la poignée 50 est en position haute comme illustré sur la figure 2, les barrettes 60 et la came 70 sont en position relevée.

Dans cette position, il est possible d'insérer l'outil d'éjection 20 illustré sur la figure 1 dans le cadre d'éjection supérieur 30 en faisant glisser le lardon amont 24 le long de la barre de support amont 31 et les lardons aval 23 le long de la barre de support 39 correspondant. La face supérieure de l'outil 20 est alors à niveau avec la face inférieure des traverses. Cette translation est accomplie jusqu'à ce que le plot de centrage 25 vienne se caler contre la butée 70.

Lorsque la poignée 50 est ensuite abaissée comme illustré sur la figure 3, les barrettes 60 viennent s'appuyer contre la face amont des lardons aval 23 et, simultanément, la face active droite de la came 72 vient prendre appui contre la face gauche du plot de centrage 25. Ceci a pour premier effet de pousser le bord aval de la planche 22 contre la tranche amont de la barre de support aval 39, la position de cette tranche étant réglée comme ligne de référence dite premier filet. Ces barres d'appui agissent sur ces lardons avec une force importante de l'ordre de 50 Newtons. Le second effet est que la partie oblique de la face active de la came 72 a progressivement serré le plot de centrage 25 contre la butée 70 qu'elle maintient par la suite fermement. Comme on a pu le constater, cette mise en place de l'outil 20 dans son cadre 30 a été particulièrement rapide. Surtout, les forces de maintien étant essentiellement effectuées sur la partie aval, le lardon amont 24 repose naturellement sur sa barre de support 31 et les bords droit et gauche de l'outil restent libres. Aucune tension n'est ainsi induite dans le plan de l'outil, ce qui évite tout risque de gauchissement.

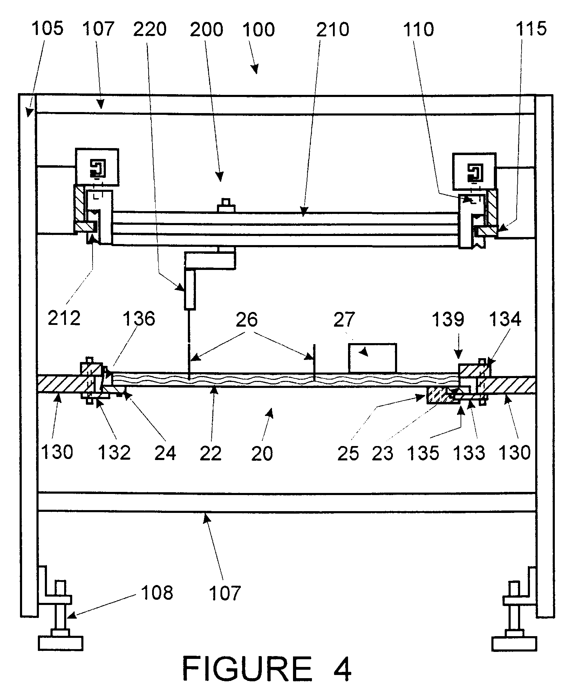

Sur la figure 4 est illustrée schématiquement de côté une table de réglage 100 permettant d'ajuster la position d'aiguilles télescopiques 220 d'un outil inférieur d'éjection 200 rigoureusement en vis-à-vis d'aiguilles 26 appartenant à un outil d'éjection supérieur 20.

Cette table de réglage comprend deux plaques montantes longitudinales 105 reliées entre elles par des traverses supérieure et inférieure 107. Les plaques montantes 105 sont installées sur des pieds 108. Comme illustré, les outils à régler sont montés à l'envers, c'est-à-dire que l'outil d'éjection supérieur 20 est situé dans la partie inférieure de la table de réglage 100 avec ses organes de travail orientés vers le haut, alors que l'outil inférieur d'éjection 200 est situé dans la partie supérieure de la table avec ses aiguilles télescopiques 220 orientées vers le bas.

De manière conventionnelle, le cadre 210 de l'outil inférieur présente des rainures amont et aval 212 permettant d'engager cet outil sur des lardons de support 115 horizontaux fixés par des entretoises le long des plaques montantes 105. Le cadre 210 est fixé en position par des tenons de verrouillage 110 pouvant être déplacés par des tiges traversant une encoche en C, ces tenons pénétrant dans des pots de fixation similaires à ceux illustrés sous la référence 37 de la figure 2.

Plus particulièrement selon l'invention, cette table de réglage comprend deux barres de support, une amont 133 et une aval132 horizontales, fixées le long des plaques montantes 105 par des entretoises 130. La première barre de support 133 comprend de plus une encoche médiane 135. Cette première barre de support 133 est de plus surmontée d'une barre de référence 134 dont la tranche gauche définit la référence 139 du premier filet. De l'autre côté, la deuxième barre de support 132 est complétée d'une lame ressort verticale 136 dont le bord supérieur est fixé à une barre complémentaire laissant ainsi le bord inférieur flexible.

Un outil d'éjection supérieur 20 peut alors être mis facilement en position en faisant coulisser le lardon aval 23 le long de la première barre de support 133 et le lardon amont 24 le long de la seconde barre de support 132. Dans un premier temps, l'outil est décalé sur la gauche contre l'effet de la lame de ressort tant que le plot de centrage 25 n'est pas encore tombé dans son encoche correspondante 135.

Le dispositif de fixation illustré sur les figures 2 et 3 peut être également utilisé pour l'outil d'éjection intermédiaire constitué par la planche ajourée sur laquelle vient reposer la feuille découpée. On peut également envisager d'utiliser ce même dispositif dans la station de découpe en tant que platine supérieure portant une planche dont la face inférieure est garnie de couteaux. Alors, les outils d'éjection supérieurs, la planche ajourée et l'outil de découpe peuvent être fabriqués aisément dans un atelier de menuiserie. La table de réglage est alors utile seulement pour régler hors machine le cadre inférieur portant les aiguilles télescopiques. La manipulation pour la préparation des différentes séries de production de boîtes est ainsi considérablement allégée. La table de réglage ne comporte plus alors qu'un seul cadre : celui de l'outil d'éjection supérieur.

De nombreuses améliorations peuvent être apportées à ces outils et équipements dans le cadre des revendications.

## Revendications

1. Outil plan (20) pour machine de découpe d'éléments en plaque, caractérisé en ce qu'il est constitué d'une planche (22), si désiré ajourée, dont la face inférieure est garnie d'organes de travail (27,28), dont la face supérieure est complétée en son bord aval d'un pot de centrage (25) et d'un ou plusieurs lardons de fixation (23) et en son bord amont également d'un ou plusieurs lardons de fixation (24), lesquels lardons protubèrent à l'extérieur de la planche, et dont le bord gauche est complété d'un moyen de préhension (26); ou à l'inverse les organes de travail garnissant la face supérieure et les lardons et pot de centrage la face inférieure.

2. Equipement de fixation de l'outil selon la revendication 1 dans une station de machine de découpe, caractérisé en ce qu'il comprend un cadre (30) solidaire de cette station, cadre dont les faces inférieures des traverses amont (32) et aval (34) sont complétées de barres de support (31, 39) protubérant à l'intérieur du cadre et sur lesquelles reposent les lardons (23, 24) en correspondance de la planche (22), ainsi que des moyens de pression latéraux (40, 72) du pot de centrage (25) de la planche (20) contre une butée (70) du cadre (30) et des moyens de pression longitudinaux (40, 62, 60, 23) du bord aval de la planche contre une face verticale de référence (39) du cadre.

3. Equipement de fixation selon la revendication 2, caractérisé en ce que le cadre (30) comprend une ou plusieurs traverses intermédiaires (38) de raidissement dont les faces inférieures se situent au niveau de la face supérieure de l'outil (20).

4. Equipement de fixation selon la revendication 2, caractérisé en ce que les moyens de pression longitudinaux du bord aval de la planche comprennent un axe transversal de commande (40) monté mobile en rotation proche et parallèle de la face interne de la traverse aval (34) du cadre, cet axe portant une pluralité de bras radiaux (62) venant directement, ou par l'intermédiaire de barrettes (60) reliant deux extrémités de bras, appuyer sur la face amont du lardon aval (23) en fin de rotation de l'axe sous l'effet de moyens élastiques (48) comprimés agissant entre le cadre (42) et l'axe (46) ou les bras, l'une des extrémités de l'axe comportant une poignée (50) permettant d'appliquer une rotation en sens contraire.

5. Equipement de fixation selon la revendication 4, caractérisé en ce que les moyens de pression latéraux comprennent une came (72) solidaire de l'axe de commande (40), came dont la face en vis-à-vis de la butée (70) du cadre est tout ou en partie oblique (73) orientée de telle sorte à pousser, lors de la rotation de l'axe sous l'effet des moyens élastiques (48), le pot de centrage (25) de la planche (22) latéralement contre la butée (70) protubérant de la face interne de la traverse aval (34) du cadre.

6. Equipement de fixation selon la revendication 4, caractérisé en ce que les moyens élastiques comprennent un ou plusieurs ressorts hélicoïdaux coaxiaux à l'axe de commande (40) auquel ils sont reliés en une première extrémité (46), et dont l'autre extrémité est reliée au corps d'un palier (42) de support de l'axe solidaire du cadre (30).

7. Equipement de fixation dans une table de réglage (100) pour un outil d'éjection supérieur (20) réalisé selon la revendication 1 avec des organes de travail (27, 28) sur sa face inférieure et mis à l'envers dans la table et pour un outil inférieur (200), caractérisé en ce qu'il comprend une paire de barres de support (132, 133) montées horizontalement en vis-à-vis dans la structure de la table, si nécessaire au moyen d'entretoises (130), la première barre de support (133) recevant le lardon aval (23) présentant une encoche (135) pour le plot de centrage (25) de l'outil, et cette barre de support étant surmontée d'une barre de référence (134) contre laquelle vient prendre appui le bord aval de la planche (22); la seconde barre de support (132) recevant le lardon amont (24) étant complétée de moyens élastiques (136) poussant l'outil (20) en direction de la première barre de support (133).

8. Equipement de fixation selon la revendication 7, caractérisé en ce que les moyens élastiques comprennent une lame ressort (136) verticale parallèle à la seconde barre de support (132), et dont le bord supérieur est solidaire de la structure de la table et dont le bord inférieur appuie sur la tranche externe du lardon amont (24).
